# EUROPÄISCHE PATENTSCHRIFT

(11) **EP 0 210 463 B1**
(45) Veröffentlichungstag und Bekanntmachung des Hinweises auf die Patenterteilung: **01.02.1995**
(21) Anmeldenummer: 86109054.6
(22) Anmeldetag: 03.07.1986
(51) Int. Cl.: B23K 37/04, B25J 19/00

(54) **Einrichtung zum Fertigen und Bearbeiten, insbesondere zum Schweissen von Werkstücken im Wechseltakt**
Device for finishing and processing, especially for welding work pieces in alternate strokes
Dispositif pour fabriquer et traiter, notamment pour le soudage de pièces à usiner en mouvement alternatif

(30) Priorität: 20.07.1985 DE 3526076
(43) Veröffentlichungstag der Anmeldung: 04.02.1987
(73) Patentinhaber: ABB Roboter GmbH, D-69169 Friedberg (DE)
(72) Erfinder: Diedrich, Franz, D-61231 Bad Nauheim (DE)
(74) Vertreter: Fritsch, Klaus

(56) Entgegenhaltungen:
- DD-A- 220 885
- GB-A- 2 105 234
- US-A- 4 310 958

## Beschreibung

Die Erfindung betrifft eine Einrichtung zum Fertigen und Bearbeiten, insbesondere zum Schweißen, von Werkstücken im Wechseltakt nach dem Oberbegriff des Anspruches 1.

Roboter, insbesondere Schweißroboter, könen die ihnen gestellten Aufgaben nur dann erfüllen, wenn sie mit entsprechenden peripheren Einrichtungen gekoppelt werden. Diese müssen die Werkstücke oder deren Einzelteile dem Roboter zuführen, sie in Fertigungsposition halten, spannen und nach dem Fertigen abtransportieren. Dabei wird die Wirtschaftlichkeit des Roboterarbeitsplatzes durch die Anwendung des Wechseltaktes erhöht, wobei die Arbeitsoperationen für das Fertigen und die Hilfsoperationen, wie das Einlegen und Spannen gleichzeitig, also parallel ablaufen.

Aus der Fachzeitschrift "Schweißen und Schneiden", DVS-Verlag, Düsseldorf, Jahrgang 4/85, Seite A 19, Schweißroboter mit Positionier-System ORBIT 500 ist es bekannt, im Umkreis eines stehenden Schweißroboters zwei Dreh- und Schwenkpositionierer anzuordnen. Die Positionierer werden im Wechseltakt betrieben, d. h. während der Bedienungsmann einen der Positionierer bestückt, schweißt der Roboter am anderen.

Eine derartige Anordnung, bei der der Roboter abwechselnd von einem Positionierer zum anderen Positionierer verfährt, führt zu einem großen Roboterarbeitsraum und einem großen Flächenbedarf. Durch die Anordnung der Positionierer in einem weiten Abstand von dem Roboter ist es nicht möglich, lange Werkstücke zu fertigen. Dabei muß jeder Positionierer mit aufwendigen Sicherheits- und Schutzeinrichtungen ausgestattet werden. Durch die räumlich getrennten und wechselweise als Fertigungs- und Bedienpositionierer verwendeten Dreh- und Schwenktische muß die Bedienungsperson wechselweise von einem zum anderen Positionierer gehen. Dies führt bei kurzen Fertigungszeiten zu einer erhöhten Belastung der Bedienungsperson. Um hierbei eine Gefährdung der Bedienungsperson zu vermeiden, sind erhöhte Sicherheitseinrichtungen des Roboterarbeitsraumes erforderlich. So muß beispielsweise sichergestellt werden, daß bei fehlerhafter Robotersteuerungssoftware bzw. Fehlern im Fertigungsprogramm der Roboter nicht mit der Bedienungsperson kollidiert. Bei einer mechanischen Zuführung der Werkstücke muß jedem Positionierer eine Zuführeinrichtung zugeordnet werden.

In der GB 2 105 234 A sind unterschiedlich zur vorhergehend beschriebenen Anordnung zwei Positionierer auf einem Drehtisch angeordnet, wodurch sie im Wechseltakt in den Arbeitsraum des Industrieroboters geschwenkt werden können. Dabei befindet sich der Roboter neben dem Drehtisch. Hierdurch können die langen Wege der Bedienungsperson verringert werden. Es werden jedoch nur eine unzureichende Nutzung des Roboterarbeitsraumes und eine geringe Arbeitssicherheit erreicht. Bei einer mechanischen Zuführung der Werkstücke muß auch hier jedem Positionierer eine Zuführeinrichtung zugeordnet werden.

Der Erfindung liegt die Aufgabe zugrunde, eine besserre Nutzung des Arbeitsraumes von Industrierobotern zu schaffen und gleichzeitig die Arbeitssicherheit des Roboterarbeitsplatzes zu erhöhen.

Diese Aufgabe wird bei einer gattungsgemäßen Einrichtung durch die kennzeichnenden Merkmale des Anspruches 1 gelöst.

Weiterbildungen der Erfindung sind in den abhängigen Ansprüchen angegeben.

Die mit der Erfindung erzielten Vorteile bestehen insbesondere in der besseren Nutzung des Roboterarbeitsraumes bei gleichzeitiger Erhöhung der Sicherheit für Bedienungspersonen. Durch die Zuordnung des Roboters zu einem fest vorgegebenen Fertigungtisch können die Sicherheitsvorkehrungen am Roboter aufgrund der Achsbegrenzungen auf ein Minimum reduziert werden, ohne daß die Beweglichkeit des Roboters an der Fertigungsseite eingeschränkt wird. Dabei ist nur dieser Gefährdungsbereich mit einer Sicherheits- und Schutzeinrichtung zu versehen. Durch die Anordnung von nur einem Fertigungstisch im Roboterarbeitsraum wird es vorteilhaft möglich, Roboter mit kleinem Innenradius des Arbeitsbereiches bzw. großer Ausladung nach hinten einzusetzen. Durch die Anordnung des Roboters in der Nähe des Fertigungstisches werden einerseits die Störkonturen im Roboterarbeitsraum verringert und andererseits eine Möglichkeit geschaffen, lange Werkstücke zu fertigen. Beim Einlegen, Positionieren und Spannen von Werkstücken ist die Bedienungsperson nur an einen Arbeitsort gebunden, so daß bei längeren Fertigungszeiten und kürzeren Hilfszeiten vorteilhaft eine Mehrstellenbearbeitung möglich ist. Eine besonders vorteilhafte Ausbildung eines Mehrstellenarbeitsplatzes ergibt sich beim Einsatz von zwei Roboterarbeitsplätzen nach der Erfindung, bei dem die Bedienseiten gegenüberliegend angeordnet sind. Die Bedienungsperson muß hierbei lediglich um 180° drehen.

Ferner ist es vorteilhaft möglich, weitere der Fertigungsseite zugeordnete Roboter außerhalb der Grunddreheinheit anzuordnen. Hierdurch können die Fertigungszeiten verringert werden, ohne daß besondere Sicherheitsvorkehrungen für die Bedienungsperson getroffen werden müssen.

Durch die Anordnung von Schnellzentrierelementen in oder an den Grundtischen der Grunddreheinheit wird eine besonders einfache und schnelle Zuordnung der Positionierer zu dem Roboter erreicht. Dabei ergibt sich eine hohe Flexibilität des Roboterarbeitsplatzes. Mit der Anordnung einer Steuerung auf der Bedienseite der Grunddreheinheit ist es möglich, den Drehvorgang der Grunddreheinheit in definierter Position zu dem Roboter zu positionieren. Mit dem Positionieren erfolgt gleichzeitig eine Abkopplung des Drehantriebes, so daß während der Fertigung die Grunddreheinheit nicht steuerbar ist. Vorteilhaft weist die Grunddreheinheit auch Stromkupplungen auf, an die die Positonierer angeschlossen werden. Dabei ist vorzugsweise die Energieversorgung der Stromkupplungen während des Drehvorganges der Grunddreheinheit verriegelt.

Ein Ausführungsbeispiel der Erfindung ist in der Zeichnung dargestellt und wird im folgenden näher beschrieben.

Es zeigen:
- Figur 1: eine schematische Seitenansicht des Roboterarbeitsplatzes mit einer Grunddreheinheit und einem im Zentrum der Grunddreheinheit angeordneten Industrieroboter,
- Figur 2: eine schematische Draufsicht des Roboterarbeitsplatzes, und
- Figur 3: ein als Drehvorrichtung ausgebildeter Positionierer.

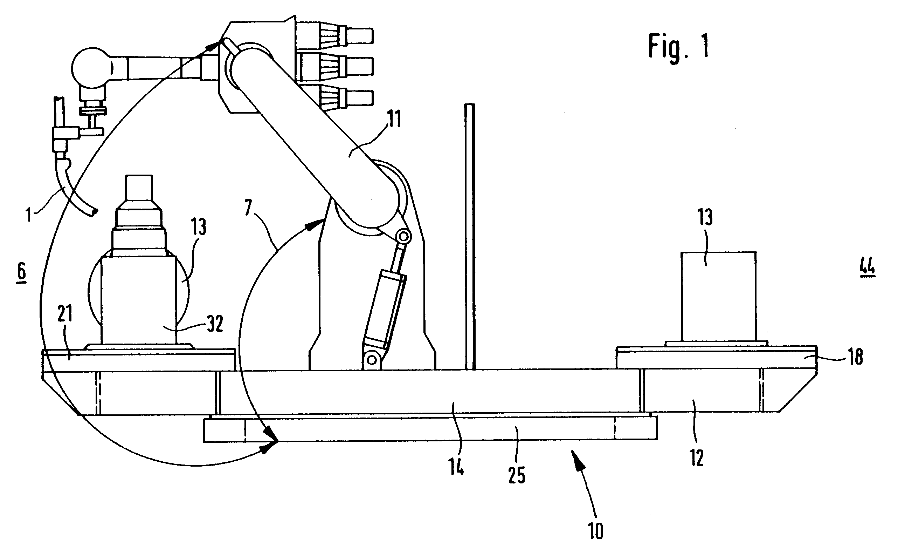

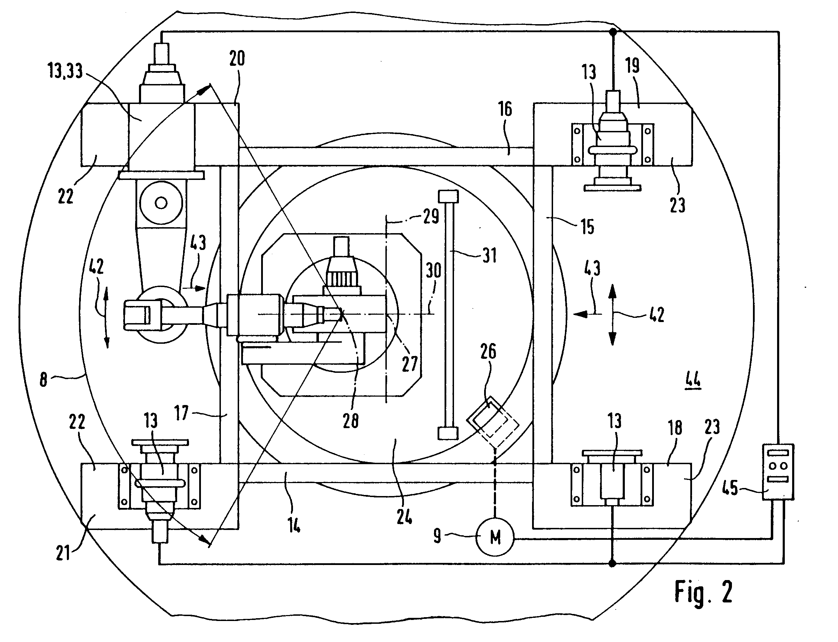

Der in den Figuren 1 und 2 dargestellte Roboterarbeitsplatz 10 besteht im wesentlichen aus einem Industrieroboter 11, im folgenden kurz Roboter 11 genannt, einer Grunddreheinheit 12 und auf der Grunddreheinheit 12 angeordneten Positionierern 13. Die Grunddreheinheit besteht aus vier Tragholmen 14, 15, 16, 17, die vorzugsweise zu einem quadratischen Rahmen verbunden sind. An den Ecken des Rahmens sind Konsolen 18, 19, 20, 21 auf gleicher Höhe befestigt. Vorzugsweise ist der Rahmen mit den Konsolen als Schweißkonstruktion ausgebildet und zusätzlich durch nicht näher dargestellte Quer- und Längstraversen versteift. Jeweils zwei Konsolen 20, 21 und 18, 19 bilden einen Grundtisch 22, 23. Die Grundtische 22, 23 sind durch die Tragholme 14, 16 räumlich voneinander beabstandet. Im Mittelteil des Rahmens ist eine Roboteraufnahmeöffnung 24 vorgesehen, in der der Roboter 11 angeordnet ist.

Die Grunddreheinheit 12 ist an einem horizontal gelagerten Drehkranz 25 befestigt. In den Drehkranz 25, der vorzugsweise als Zahnkranz ausgebildet ist, greift eine Schnecke 26 ein, die über einen Antrieb 9 angetrieben wird. Vorzugsweise ist die Schnecke 26 als Globoidschnecke ausgebildet und der Zahnkranz weist eine Globoidform auf.

Die Energieübertragung erfolgt über nicht näher dargestellte Kabelschleppeinrichtungen oder über ein Andocksystem in der jeweiligen Endstellung.

Der Roboter 11 wird im Wechseltakt betrieben, d. h. während auf der Fertigungsseite 6 das Werkstück vorzugsweise mit einem Schweißbrenner 1 mit abschmelzender Elektrode geschweißt wird, erfolgt auf der Bedienseite 44 ein Beladen der Grunddreheinheit. Aufgrund der breiten Auflage der Grunddreheinheit 12 werden vorteilhaft keine der beim Be- und Entladen auf der Bedienseite 44 auftretenden Schwingungen auf die Fertigungsseite 6 übertragen. Anschließend wird die Grunddreheinheit 12 um 180° gedreht, wobei das unbearbeitete Werkstück in und das fertiggeschweißte Werkstück aus dem Roboterarbeitsraum 7, 8 gefördert werden.

Der Roboter 11 ist vorzugsweise als stehender Gelenkarmroboter oder Knickarmroboter ausgebildet und beabstandet zur Mittelachse 27 der Grunddreheinheit 12 in der Roboteraufnahmeöffnung 24 angeordnet. Die Mittelachse 27 der Grunddreheinheit 12 bildet sich am Kreuzungspunkt einer Querkoordinate 29 mit einer Längskoordinate 30. Vorzugsweise ist der Roboter beabstandet zur Mittelachse 27 auf einer parallel zur Querkoordinate 29 und auf der Längskoordinate 30 liegenden Robotermitelachse 28 zu einem Grundtisch 22 näher angeordnet. Durch die Anordnung in der Nähe eines Grundtisches 22 werden vorteilhaft Störkonturen vermieden. Der zu dem Roboter 11 näher angeordnete Grundtisch 22 ist der Fertigungstisch.

Zwischen dem als Fertigungstisch dienenden Grundtisch 22 und dem auf der anderen Seite vorgesehenen, als Bedientisch dienenden Grundtisch 23 ist ein Blendschutz 31 angeordnet, der vorzugsweise ortsfest in der Roboteraufnahmeöffnung 24 befestigt ist.

Auf den Grundtischen 22 werden die Positionierer 13 befestigt, die wahlweise als Dreh- und/oder Kippvorrichtungen sowie einfache Aufspannvorrichtungen ausgebildet sind.

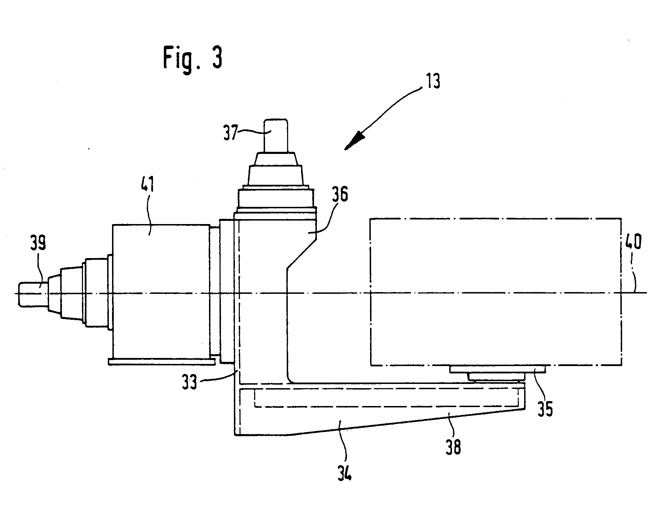

In der Figur 3 ist ein als Drehvorrichtung 33 ausgebildeter Positionierer 13 schematisch dargestellt, der im wesentlichen aus einem L-förmig ausgebildeten Dreharm 34 besteht, auf dessen freiem Horizontalschenkel 38 ein Drehteller 35 angeordnet ist. Um die Zugänglichkeit beim Beladen und Fertigen der Drehvorrichtung 33 zu erhöhen und Störkonturen zu vermeiden, weist der Drehteller 35 vorzugsweise einen kleinen Durchmesser auf. Der Drehteller 35 weist nicht näher dargestellte Spann- und Befestigungselemente auf, mit denen die Werkstücke auf dem Drehteller 35 festgespannt werden können. Der Drehteller 35 wird von einem auf dem Vertikalschenkel 36 angeordneten Antriebsmotor 37 angetrieben. Die Kraftübertragung erfolgt vorzugsweise durch einen nicht näher dargestellten Zahnriemen. Selbstverständlich ist auch eine Stahlbandübertragung oder eine Kette zwischen dem Antriebsmotor 37 und dem Drehteller 35 als Kraftübertragungsglied möglich. Durch die Anordnung des Antriebsmotors 37 auf dem Vertikalschenkel 36 wird vorteilhaft eine flache Bauweise der Drehvorrichtung 33 erreicht. Weiterhin kann die Energieübertragung zu dem Antriebsmotor 37 über eine Hohlwelle erfolgen. Durch die vorteilhafte Anordnung des Antriebsmotors 37 auf dem Vertikalschenkel 36 kann das Gegengewicht reduziert werden. Hierdurch werden in besonders einfacher Art und Weise konstante Drehgeschwindigkeiten erreicht. An der Längsseite des Vertikalschenkels 36 ist ein weiterer Antriebsmotor 39 angeordnet, mit dem der Dreharm 34 um die Achse 40 drehbar ist. Zwischen dem Antriebsmotor 39 und dem Vertikalschenkel 36 ist ein Übertragungs- und Koppelelement 41 angeordnet, mit dem die Drehvorrichtung 33, beispielsweise auf der Konsole 20, befestigt wird.

Vorzugsweise sind in den Konsolen 18, 19, 20, 21 und dem Übertragungs- und Koppelelement 41 miteinander in Wirkverbindung stehende Schnellzentrierelemente, beispielsweise in den Konsolen angeordnete Paßbohrungen und an den Positionierern 13, 33 angeordnete Paßzapfen vorgesehen, mit denen die Positionierer 13, 33 relativ zum Roboter positionierbar sind. Selbstverständlich sind auch andere Ausbildungen der Schnellzentrierelemente, wie z. B. in den Konsolen 18, 19, 20, 21 und an den Positionierern 13, 33 vorgesehene Zentriernuten, sowie in die Zentriernuten einsetzbare paßgenaue Nutensteine möglich. Durch die Anordnung der Drehvorrichtung 33 quer, vorzugsweise rechtwinklig, zur Längskoordinate 30 auf dem Grundtisch 22 werden vorteilhafte geringe Störkonturen im Roboterarbeitsraum 7, 8 erzielt. Nach einer besonders vorteilhaften Ausgestaltung sind dabei die Schnellzentrierelemente so in den Konsolen angeordnet, daß die Positionierer 13, 33 in ihrer Lage auf den Konsolen 18, 19, 20, 21 in Pfeilrichtung 42 verändert werden können. Durch einen so erreichten größeren Abstand zwischen den Positionierern 13 und einer Anordnung der Positionierer 13, 33 in räumlicher Nähe bei dem Roboter 11 (Pfeilrichtung 43) wird es besonders vorteilhaft möglich, lange Werkstücke mit dem Roboter 11 zu fertigen. Dabei wird die Länge der Werkstücke durch den Roboterschwenkkreis des Roboterarbeitsraumes 8 und die räumliche Nähe des Werkstückes zu dem Roboter 11 bestimmt. Vorteilhaft muß der Roboter 11 bei der Bearbeitung von insbesondere langen Werkstücken nicht zurückgefahren werden, da an der Endstellung des fertig bearbeiteten Werkstückes mit der Fertigung des neu eingeschwenkten Werkstückes begonnen werden kann. Bei über die Grundtische 22, 23 ragenden langen Werkstücken besteht beim Drehvorgang vorteilhaft keine Kollisionsgefahr mit dem Roboter 11.

In den Konsolen 18, 19, 20, 21 sind vorzugsweise Stromkupplungen vorgesehen, über die den Positionierern 13, 33 Energie zuführbar ist. Dei Energiezuführung zu den Stromkupplungen erfolgt bevorzugt durch Hohlwellen in den Antrieben.

In der Endstelle der reversierend arbeitenden Grunddreheinheit 12 wird ein Antriebsmotor 9 zum Antrieb der Antriebsschnecke 26 von der Bedienseite 44 aus mittels einer tragbaren Handsteuerung 45 ausgeschaltet und die Grunddreheinheit 12 arretiert. Hierzu ist an der Grunddreheinheit 12 und dem Roboter 11 eine Positioniervorrichtung zur Festlegung der relativen Lage zwischen dem Roboter und der Grunddreheinheit angeordnet. Die Positioniervorrichtung kann beispielsweise aus einer an der Grunddreheinheit 12 angeordneten Fixierbohrung und einem an dem Roboter 11 angeordneten Hydraulikzylinder mit Fixierkolben bestehen. Vorzugsweise wird nach der Abkopplung der Antriebsschnecke mit dem Antriebsmotor 9 über die Handsteuerung 45 die Energiezufuhr für die Positionierer 13 freigegeben und somit der Fertigungsvorgang eingeleitet.

## Patentansprüche

1. Einrichtung zum Fertigen und Bearbeiten, insbesondere Schweißen von Werkstücken im Wechseltakt mit einem stehenden Industrieroboter (11), dem Werkstückpositionierer (13, 33) zugeordnet sind, die auf einer Grunddreheinheit (12) angeordnet und in den Arbeitsraum (7, 8) des Industrieroboters (11) drehbar sind, dadurch gekennzeichnet, daß die Grunddreheinheit (12) eine Aufnahmeöffnung (24) für den Industrieroboter (11) aufweist und um den in der Aufnahmeöffnung (24) angeordneten Industrieroboter (11) drehbar ist.

2. Einrichtung nach Anspruch 1, dadurch gekennzeichnet, daß die Grunddreheinheit (12) mindestens zwei durch die Aufnahmeöffnung (24) getrennte Grundtische (22, 23) aufweist, die an einem horizontal gelagerten Drehkranz (25) befestigt und mit einem Antrieb (9) um die Mittelachse (27) des Drehkranzes (25) drehbar sind.

3. Einrichtung nach Anspruch 1 oder 2, dadurch gekennzeichnet, daß der Antrieb (9) mit einer Schnecke (26), vorzugsweise einer Globoidschnecke, verbunden ist, die mit dem Drehkranz (25), vorzugsweise einem in Globoidform ausgebildeten Zahnkranz, in Wirkverbindung steht.

4. Einrichtung nach Anspruch 3, dadurch gekennzeichnet, daß der Antrieb (9) mit einer Handsteuerung (45) verbunden ist.

5. Einrichtung nach Anspruch 1 oder 2, dadurch gekennzeichnet, daß die Grunddreheinheit (12) zwei koaxial um 180° versetzt auf dem Drehkranz (25) angeordnete Grundtische aufweist.

6. Einrichtung nach Anspruch 1 bis 5, dadurch gekennzeichnet, daß der Roboter (11) mit seiner Mittelachse (28), die in einem Abstand parallel zur Mittelachse (27) des Drehkranzes (25) verläuft, zu einem Grundtisch (22) näher angeordnet und dieser Grundtisch (22) der Fertigungstisch ist.

7. Einrichtung nach Anspruch 1 bis Anspruch 6, dadurch gekennzeichnet, daß die Grundtische (22, 23) Schnellzentrierelemente aufweisen, mit denen die Positionierer (13, 33) relativ zum Roboter (11) positionierbar sind.

8. Einrichtung nach Anspruch 1 bis 7, dadurch gekennzeichnet, daß die Grundtische (22, 23) Stromkupplungen aufweisen, an die die Positionierer (13, 33) anschließbar sind.

9. Einrichtungen nach einem der Ansprüche 1 bis 8, dadurch gekennzeichnet, daß der Roboter (11) als Gelenkarmroboter oder Knickarm ausgebildet ist.

10. Einrichtung nach einem der Ansprüche 1 bis 9, dadurch gekennzeichnet, daß der Grunddreheinheit (12) ein stationärer Blendschutz (31) zugeordnet ist, der vorzugsweise in der Aufnahmeöffnung (24) angeordnet ist.

## Claims

1. Apparatus for processing and treating, particularly welding, workpieces in alternating sequence, which has an upright industrial robot (11) with which are associated workpiece positioners (13, 33) which are arranged on a base turning unit (12) and can be turned into the working space (7, 8) of the industrial robot (11), characterized in that the base turning unit (12) has a holder opening (24) for the industrial robot (11) and can be turned about the industrial robot (11) arranged in the holder opening (24).

2. Apparatus according to Claim 1, characterized in that the base turning unit (12) has at least two base tables (22, 23) which are separated by the holder opening (24) and which are fastened on a horizontally mounted turning ring (25) and can be turned by means of a drive (9) about the centre axis (27) of the turning ring (25).

3. Apparatus according to Claim 1 or 2, characterized in that the drive (9) is connected to a worm (26), preferably a globoid worm, which is operatively connected to the turning ring (25), preferably a toothed ring having a globoid shape.

4. Apparatus according to Claim 3, characterized in that the drive (9) is connected to a hand control (45).

5. Apparatus according to Claim 1 or 2, characterized in that the base turning unit (12) has two base tables arranged on the turning ring (25) and offset coaxially by 180°.

6. Apparatus according to Claims 1 to 5, characterized in that the robot (11) is arranged with its centre axis (28), which extends at a distance from and parallel to the centre axis (27) of the turning ring (25), closer to one base table (22) and this base table (22) is the processing table.

7. Apparatus according to Claim 1 to Claim 6, characterized in that the base tables (22, 23) have rapid centring elements by which the positioners (13, 33) can be positioned relative to the robot (11).

8. Apparatus according to Claims 1 to 7, characterized in that the base tables (22, 23) have current couplings to which the positioners (13, 33) can be connected.

9. Apparatuses according to one of Claims 1 to 8, characterized in that the robot (11) is in the form of a hinged arm robot or articulated arm.

10. Apparatus according to one of Claims 1 to 9, characterized in that a stationary glare shield (31), which is preferably arranged in the holder opening (24), is associated with the base turning unit (12).

## Revendications

1. Dispositif pour la fabrication et le façonnage, en particulier le soudage, de pièces en cadence alternée avec un robot industriel (11) à axe vertical, auquel sont associés des positionneurs de pièces (13, 33) disposés sur une unité de rotation de base (12) et pouvant être amenées par rotation dans l'espace de travail (7, 8) du robot industriel (11), caractérisé par le fait que l'unité de rotation de base (12) présente une ouverture de réception (24) pour le robot industriel (11) et peut tourner autour du robot industriel (11) disposé dans l'ouverture de réception (24).

2. Dispositif suivant revendication 1, caractérisé par le fait que l'unité de rotation de base (12) comprend au moins deux tables de base (22, 23) séparées par l'ouverture de réception (24), ces tables étant fixées à une couronne d'orientation (25) montée horizontalement et pouvant être tournée à l'aide d'un système d'entraînement (9) autour de l'axe central (27) de la couronne d'orientation (25).

3. Dispositif suivant revendication 1 ou 2, caractérisé par le fait que le système d'entraînement (9) est relié à une vis (26), de préférence une vis globique, qui se trouve en liaison avec la couronne d'orientation (25), de préférence une couronne à denture globique.

4. Dispositif suivant revendication 3, caractérisé par le fait que le système d'entraînement (9) est relié à une commande manuelle (45).

5. Dispositif suivant revendication 1 ou 2, caractérisé par le fait que l'unité de rotation de base (12) comprend deux tables de base disposées coaxialement revendication avec décalage de 180° sur la couronne d'orientation (25).

6. Dispositif suivant revendication 1 à 5, caractérisé par le fait que le robot (11) avec son axe central (28) qui s'étend à distance parallèlement à l'axe central (27) de la couronne d'orientation (25), est disposé plus près d'une table de base (22) et que cette table de base (22) est la table de fabrication.

7. Dispositif suivant revendication 1 à 6, caractérisé par le fait que les tables de base (22, 23) présentent des éléments de centrage rapide à l'aide desquels les positionneurs (13, 33) peuvent être positionnés par rapport au robot (11).

8. Dispositif suivant revendication 1 à 7, caractérisé par le fait que les tables de base (22, 23) présentent des coupleurs de courant auxquels les positionneurs (13, 33) peuvent être raccordés.

9. Dispositif suivant l'une des revendications 1 à 8, caractérisé par le fait que le robot (11) est réalisé sous forme de robot à bras articulé ou à bras brisé.

10. Dispositif suivant l'une des revendications 1 à 9, caractérisé par le fait qu'un écran de protection (31) stationnaire, qui est de préférence disposé dans l'ouverture de réception (24), est associé à l'unité de rotation de base (12).
